# EUROPEAN PATENT APPLICATION

(11) **EP 4 550 113 A1**
(43) Date of publication of application: **07.05.2025**
(21) Application number: 24207575.2
(22) Date of filing: 18.10.2024
(51) Int. Cl.: G06F 7/58, G06N 20/00, G06F 21/62

(54) **ELECTRONIC DEVICE FOR GENERATING SYNTHESIZED DATA, METHOD, DATA SET, UNIT ACTING AS A MACHINE-LEARNING MODEL, AND MACHINE-LEARNING DEVICE**

(30) Priority: 30.10.2023 DE 102023129992
(71) Applicant: Bundesdruckerei GmbH, 10969 Berlin (DE)
(72) Inventor: KOWALSKI, HAGEN-HENRIK, 12307 Berlin (DE); EBLE, Holger, 10965 Berlin (DE); SIMON, Lars, 10117 Berlin (DE); RADONS, Manuel, 15712 Königs Wusterhausen (DE)
(74) Representative: Richardt Patentanwälte PartG mbB

(57) **Abstract**

An electronic device (100) for generating synthesized data (14) that comprises a digital computer (10) being configured to receive first data sets (12) and to transform the first data sets (12) into second synthesized data sets (14) by executing a transform algorithm, wherein in the transform algorithm, Laplace noise is used as an input, further comprises a quantum random number generator (30) that is providing random quantum numbers of maximum theoretical entropy and that is communicatively coupled to the digital computer (10), the computer being configured to use quantum random numbers provided by the quantum random number generator (30) for obtaining the Laplace noise for entry into the transform algorithm

## Description

The invention is related to an electronic device for generating synthesized data, a method of generating such data, a data set obtainable by the method, a unit acting as a machine learning model, a machine-learning device, and a method of training a machine learning model.

The preferred use of the invention is when data include personal information as to physical persons. Such data can, e.g., be medical data and/or telemetric data informing, e.g., about the location for multiple points of time. These data might specifically be or include measurement data such as from a medical device (that measures heart rate, blood pressure, and the like), or measured telemetric data.

The problem from which the invention starts mainly occurs when such data are used in a higher amount for providing a deeper analysis. That might include the use of machine learning models, for example such as using neural networks. For instance, a machine-learning model might be used for analyzing medical data in order to find out whether or not there is a correlation between two kinds of inputs (inputs such as age, weight, heart rate, and the like on the one hand and having suffered a heart attack, cancer, and the like, on the other hand). Although machine-learning models tend to provide for some generalization, the original training data used for training them, are commonly not fully privatized. However, the final aim is to obtain information where privacy is kept. Generally, obtaining privatized data is difficult.

The paper published in a NIST blog (NIST is the National Institute of Standards and Technology by the U.S. Department of Commerce) authored by Nicolas Papernot and Abhradeep Guha Thakurta having the title "How to deploy machine learning with differential privacy", as published on 21 December 2021 and as available on 21 July 2023 under: https://www.nist.gov/blogs/cybersecurity-insights/how-deploy-machine-learning-differential-privacy, teaches that for providing a privacy ("so-called differential privacy"), noise is injected into the data that are used in a neural network. In an application case, spherical Gaussian noise is added to the sum of clipped gradients. Alternatively, a mode-agnostic private learning is applied without caring about the internal workings of the algorithm where training data are split into k disjoint subsets of equal size, and independent models θ1, ..., θk on the disjoint subsets are defined. In order to predict on a test example x, a private histogram is computed over the set of k predictions θ1(x), ..., θk(x). Then, one selects and outputs the bin in the histogram based on the highest count, after adding a small amount of Laplace or Gaussian noise to the counts.

Furthermore, the paper by Shuang Song, Kamalika Chaudhuri, and Anand D Sarwate having the title " Stochastic gradient descent with differentially private updates", in: "Proceedings of IEEE Global Conference on Signal and Information Processing", 2013, likewise teaches to use noise in a method for obtaining differntial privacy.

Other algorithms to obtain differential privacy are called PrivBayes, PrivSynth, DualQuery and PATE.

The added noise is commonly generated on the basis of calculated pseudo-random numbers. Such numbers are called "pseudo-random", since they have been provided by an algorithm and are not fully random. The basis for the calculation is commonly a prime number having a higher value, and other algorithms might trace back the random generation. This is similar as with coding and decoding

It is an object of the present application to improve the output of synthesized data for generating better analysis results.

The object is solved by an electronic device for generating synthesized data according to claim 1, by a method of generating second synthesized data sets out of first data sets according to claim 10, a data set according to claim 12, a unit acting as a machine learning modelaccording to claim 13, a machine-learning device according to claim 14, and a method of training a machine learning model according to claim 15.

The electronic device for generating synthesized data thus comprises a digital computer being configured to receive first data sets and to transform the first data sets into second synthesized data sets by executing a transform algorithm, wherein in the transform algorithm, Laplace noise is used as an input, characterized in that the electronic device further comprises a quantum random number generator providing quantum random numbers of maximum theoretical entropy communicatively coupled to the digital computer, the computer being configured to use quantum random numbers provided by the quantum random number generator for obtaining the Laplace noise for entry into the transform algorithm.

The invention introduces the idea of providing an interface to a quantum random number generator.

Such quantum random number generators providing quantum random numbers of maximum theoretical entropy do not suffer of artifacts as with the common pseudo-random numbers. Hence, the synthesized data may in a better way privatize the original data and may thus provide for better analysis results, for instance when the second synthesized data are used for feeding a machine-learning model. It has surprisingly come out that if quantum random numbers are initially used one may obtain a perfect or mostly perfect privatization. The second synthesized data are accordingly of such nature that specific input data in the first data set cannot be traced anymore. Hence, if there is a correlation looked for between kinds of input data such as age and weight and further input data such as "there having been a heart attack" or "there having been cancer", the analysis becomes more reliable when a specific combination of, let's say, age and cancer as such is lost ("63 years old, male, cancer"). A positive side-effect is that the second synthesized data sets do not need to be kept secret since the input data which might be too personal to have the permission for them to be published, cannot be reconstructed from the second synthesized data anymore.

According to preferred embodiments of the electronic device, the quantum random number generator includes a photonic integrated chip that derives quantum random numbers from squeezed photonic states. An advantage of such a photonic integrated chip might be that it reliably and relatively quickly really provides true quantum random numbers. Photonic integrated chips are described to be providing fast physical random numbers in the following three papers:
First, the paper by Kazusa Ugajin et al., having the title "Real-time fast physical random number generator with a photonic integrated circuit", Optics Express, vol. 25, no. 6 of 20 March 2017 teaches that such a photonic integrated circuit might be combined with a field-programmable gate array (FPGA) electronic board. The photonic integrated circuit consists of a photon detector, a distributed-feedback semiconductor laser, two optical semiconductor amplifiers, a passive waveguide, and an external mirror for optical feedback. The optical output from the distributed-feedback semiconductor laser is reflected by the mirror and re-injected into the laser to produce chaotic intensity fluctuations. The lasing power is controlled by the injection current of the distributed-feedback semiconductor laser. The authors observed different temporal dynamic regimes whereof they selected a chaotic isolation and avoided low-frequency fluctuations.

The second paper by Bing Bai et al., having the title "18.8 Gbps real-time quantum random number generator with a photonic integrated chip", published on 31 May 2021 and available on the internet on 21 July 2023 under https://arxiv.org/pdf/2105.13518.pdf teaches that quantum random number generators using a photonic integrated chip can produce true random numbers with high speed and size. Hence, the preferred use of the photonic integrated chip with the electronic device of the invention is advantageous not only as to providing binary true random bits of maximum theoretical entropy, but as well as providing same at high speed.

Then third paper that is authored by Lars S. Madsen, et al., has the title "Quantum computational advantage with a programmable photonic processor", was published in Nature, Vol. 606 (2 June 2022), and teaches to carry out Gaussian boson sampling on 216 squeezed modes entangles with a three-dimensional connectivity, using a time-multiplexed and photon-number-resolving architecture, leading to having a runtime over 50 million times as extreme as that reported from earlier photonic machines. In the invention, specifically, the quick device described by Madsen et al. may be made use of.

According to a preferred embodiment, the digital computer is configured to apply a hash function to quantum random numbers provided by the quantum random number generator to obtain hash values and is further configured to use the hash values in order to obtain the Laplace noise. The reason here might be seen in that quantum random numbers may have a non-limited length, whilst the hash values have a predetermined length format, hence, the hash values might be more easily to be handled with.

Preferably, herein, the digital computer is configured to apply the hash function to each of the quantum random numbers and to use each of the hash values thus obtained. That provides for hash values that basically do have the same quantum statistics as the quantum random numbers, i.e., that are highly reliable as a basis for providing Laplace noise.

Alternatively, the digital computer is configured to feed at least a part of the quantum random numbers provided by the quantum random number generator or hash values of these quantum random numbers as a seed to a pseudo-random generator provided by the digital computer. Here, as with the prior art devices, a pseudo-random generator is used. Since, however, the calculations of same are no longer made on a basis of a higher prime number, but of input (seed) that truly randomly changes over time, the output might remain somehow pseudo-random only, but is less traceable than if common algorithms were applied that use a higher prime number.

Further, generally, when the hash function is applied, preferably, the digital computer is configured to provide a pseudo-random generator that to each hash value generates multiple outputs, preferably at least ten, more preferably at least one thousand, still more preferably at least 10.000, most preferably at least one million. That might give an optimum compromise between having a good match between the quantum random statistics of the input and the statistics of the output, on the one hand, and having the pseudo-random numbers generated rather quickly, on the other hand. Although the quantum random number generation with the known devices, e.g., as disclosed by Madsen, et al., is relatively quick, the Laplace noise generation might require an even quicker provision of the numbers. Hence, taking quantum random numbers as a multiply used seed (input) to the pseudo-random generator, assists in gaining a timing advantage.

The Laplace noise might in one embodiment simply be used by adding it as a second input to data provided as a first input when performing the transform algorithm. Alternatively, the transform algorithm may inject the Laplace noise in a more sophisticated manner than mere adding, using well-known techniques.

The electronic device might in embodiments be configured to use measurement data as first data sets, in particular medical measurement data and/or telemetric data as to a person and/or to an object (the object for example being a pet or other animal, and the like). As mentioned earlier, such measurement data might need to be anonymized wherefor the electronic device of the invention is optimum.

In an embodiment as to that, the electronic device itself includes the data acquisition means to acquire the measurement data. That might provide the advantage that the measurement data can be used for generating synthesized data on the spot.

The inventive method of generating second synthesized data sets out of first data sets includes that a transform algorithm is executed, wherein in the transform algorithm, Laplace noise is used as an input, and according to the invention, quantum random numbers of maximum theoretical entropy are provided, and they are used for obtaining Laplace noise for entry into the transform algorithm.

The advantages of the inventive method are the same as disclosed above with respect to the electronic device.

A specific preferred embodiment of the method includes transmitting the second synthesized data set via a communication link or a network to a further entity. That hints to the preferred use of the second synthesized data outside of where the quantum random number generator is located.

The data set according to the invention is obtainable as the second synthesized data set out of a first data set by performing the inventive method. Such data set might be best suited for providing an optimum analysis.

The unit acting as a machine-learning model according to the invention has been trained on the basis of first data, wherein on the basis of the first data, second synthesized data have been generated as the training data by means of the method disclosed above, wherein these second synthesized data have been provided as an input to the machine-learning model. The invention thus relates to a machine-learning model that has been optimally trained by using the second synthesized data as training data, the second synthesized data being perfectly or nearly perfectly privatized.

The inventive machine-learning device is configured to receive data as an input, and further includes a source of quantum random numbers of maximum theoretical entropy and first means for receiving the quantum random numbers and for feeding same to a digital computer where they are used to obtain Laplace noise (for instance, by applying a Laplace transformation to the quantum random numbers or hash values thereof), and it further includes second means for receiving the Laplace noise and for using the Laplace noise as a second input with respect to the data provided as a first input.

The data received here as an input might be received from an external source such as training data with a machine-learning device according to the invention.

The method of training a machine-learning model according to the invention includes providing, as a first data set, raw training data and using the raw training data as a basis for the method of generating the second synthesized data sets out of first data sets as explained above, to generate second synthesized data, the second synthesized data being input as final training data to the machine-learning model. Hence, the method assists in obtaining the machine-learning unit and/or the machine-learning device according to an aspect of the invention.

Hereinafter, a preferred embodiment of the invention is explained with respect to the drawing, wherein
- Fig. 1: shows a schematic overview of the components of an electronic device according to an embodiment of the invention; and
- Fig. 2: shows a flow diagram illustrating an embodiment of the inventive method.

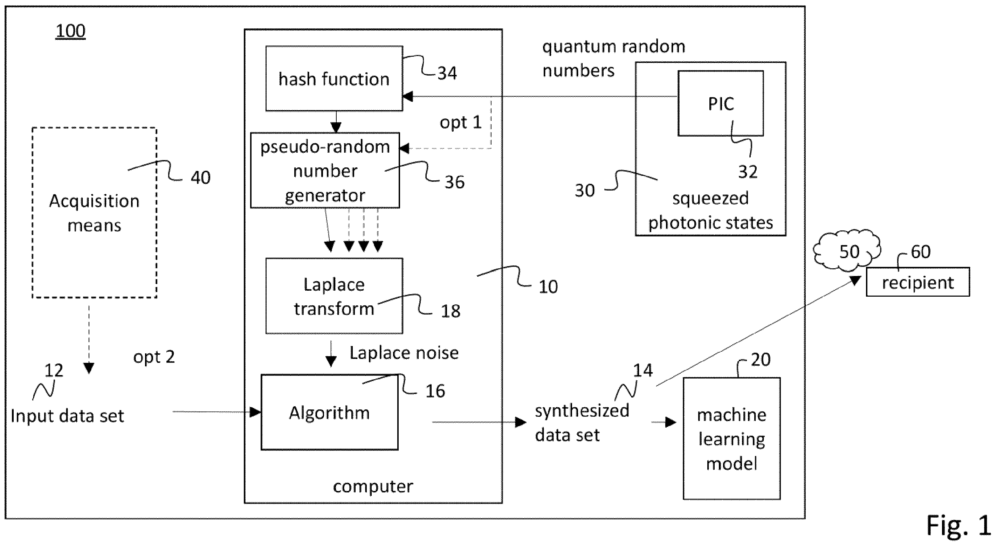

The electronic device 100 as shown in Fig. 1 includes a digital computer 10 to which an input data set 12 is fed, and from which a synthesized data set 14 is output, for feeding, e.g. as training data, with a machine-learning model 20.

The digital computer 10 includes the units 16 and 18, 34 and 36, wherein these units might represent hardware devices and/or software modules and/or combinations of hardware devices and software modules. The unit 16 of the digital computer 10 is configured to execute a transform algorithm to the input data set to generate the synthesized data set 14 as output data set. The algorithm unit 16 uses Laplace noise as further input, provided by unit 18. Instead of providing the Laplace noise on the basis of calculated numbers, there is an interface to a physical device for generating quantum random numbers, i.e., with maximum entropy:
This device includes a chip 30 with a photonic integrated circuit, PIC, 32 that generates real-time fast physical random numbers on the basis of squeezed photonic states. A good example of such chip with a photonic integrated circuit is described by Madsen et al. in the paper cited above.

The chip 30 outputs quantum random numbers to a hash function applying unit 34 of the digital computer 10. Therein, a hash value is calculated on the basis of the quantum random number (or multiple quantum random numbers) input. The hash value is provided as an input (so-called "seed") to a pseudo-random number generator 36 (another unit of the digital computer). Alternatively, see arrow indicated indicated at "opt 1", the quantum random numbers are used at least partly directly as a seed to the pseudo-ramdom number generator 36. The pseudo-random generator may for each input provide multiple outputs, specifically to speed up the procedure, when the provision of the quantum random numbers is too slow for the elsewhere applied algorithms. That might include a multiplication of outputs with respect to the input in orders of magnitude, e.g., with a factor of a hundred, a thousand, a million ,....

The pseudo-random number generator 36 outputs the pseudo-random numbers that it has calculated to the unit 18 in the digital computer 10, where, using well-known transform algorithms, Laplace noise is calculated on the basis of the pseudo-random numbers. For instance, the teachings in the following paper might be used:
G. E. P. Box and Mervin E. Muller: "A Note on the Generation of Random Normal Deviates", Annals of Mathematical Statistics, vol. 29, issue 2, pages 610/611.

The electronic device 100 may optionally include an acquisition means 40 for measurement data, the measurement data provided optionally ("opt 2") as the input data set 12. For instance, the digital computer 10 with the chip 30 and the units 34 and 36 and optionally the machine-learning model 20, might be provided in the processing unit of a medical device including the acquisition means 40 such that the data finally output are anonymized. That might apply to a medical device used for screening of members of the population. The electronic device 100 might further as well be configured as a transport means such as a vehicle, specifically an automotive vehicle. The acquisition means 40 might in that case provide measurement data to be sent to an external backend server, wherein in the vehicle itself, the data are generated as synthesized data out of the measurement data as the input data, for anonymization. Hence, the backend itself cannot reconstruct the original data.

The synthesized data set 14 may be transmitted via a data network (e.g., the Internet) 50, to a recipient, i.e. a third device 60, where the synthesize data are finally needed. Hence, the electronic device 100 may offer a service to a third party to privatize the input data set 12.

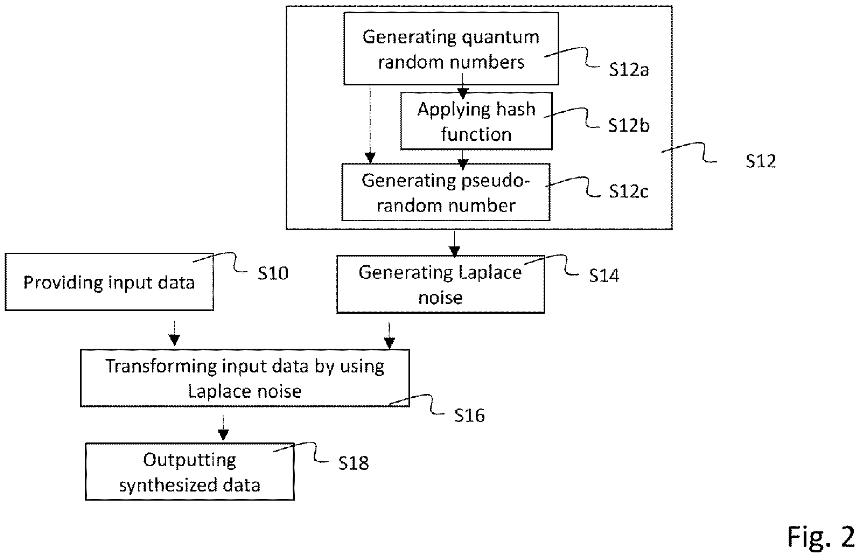

The method according to an embodiment of the invention, see flow diagram in Fig. 2, includes providing input data in step S10. It further includes to provide pseudo-random bits of a relatively high theoretical entropy in step S12 and to generate Laplace noise on the basis of these bits in step S14. The pseudo-random bits are generated in a first step of generating quantum random numbers S12a, with the ensuing step S12b of applying a hash function, and the final step S12c of using the hash values thus obtained and/or the quantum random numbers as a seed to the pseudo-random generator 36.

The input data provided in step S10 and the Laplace noise provided in step S14 are used as entry for a transform algorithm applied in step S16 (the latter not being the Laplace transform algorithm, used in S14). The transform algorithm adds or in other manner injects the Laplace noise to the input data and outputs in step S18 synthesized data.

### List of reference numerals

10 digital computer
12 input data set
14 synthesized data set
16 unit
18 unit
20 machine-learning model (unit)
30 chip
32 photonic integrated circuit
34 unit applying hash function
36 pseudo-random generator (unit)
40 acquisition means
50 data network
60 recipient (device)
100 electronic device
S10, S12, S12a, S12b, S12c, S14, S16, S18 steps of an embodiment of the inventive method

## Claims

1. An electronic device (100) for generating synthesized data (14), the electronic device (100) comprising a digital computer (10) being configured to receive first data sets (12) and to transform the first data sets (12) into second synthesized data sets (14) by executing a transform algorithm, wherein in the transform algorithm, Laplace noise is used as an input,
**characterized in that** the electronic device (100) further comprises a quantum random number generator (30,) that is providing random quantum numbers of maximum theoretical entropy and that is communicatively coupled to the digital computer (10), the computer being configured to use quantum random numbers provided by the quantum random number generator (30) for obtaining the Laplace noise for entry into the transform algorithm.

2. The electronic device of claim 1, wherein the quantum random number generator (30) includes a photonic integrated chip (32) that derives quantum random numbers from squeezed photonic states.

3. The electronic device of claim 1 or 2, wherein the digital computer (10) is configured to apply a hash function to quantum random numbers provided by the quantum random number generator (30) to obtain hash values and is further configured to use the hash values in order to obtain the Laplace noise.

4. The electronic device of claim 3, wherein the digital computer (10) is configured to apply the hash function to each of the quantum random numbers and to use each of the hash values thus obtained.

5. The electronic device of claim 3, wherein the digital computer (10) is configured to feed at least a part of the quantum random numbers provided by the quantum random number generator (30) or hash values of these quantum random numbers as a seed to a pseudo-random generator (36) provided by the digital computer (10).

6. The electronic device of any one of claims 3 to 5, wherein the digital computer is configured to provide a pseudo-random generator (36) that to each hash value generates multiple outputs, preferably at least ten, more preferably at least one thousand, still more preferably at least 10.000, most preferably at least one million.

7. The electronic device of any one of claims 1 to 6, wherein the digital computer is configured to use the Laplace noise to be added as a second input to data provided as a first input when performing the transform algorithm.

8. The electronic device of any one of claims 1 to 7, wherein the electronic device is configured to use measurement data as first data sets, in particular medical measurement data and/or telemetric data as to a person and/or to an object.

9. The electronic device of claim 8, including data acquisition means (40) to acquire the measurement data.

10. A method of generating second synthesized data sets out of first data sets, the method including that a transform algorithm is executed, wherein in the transform algorithm, Laplace noise is used as an input,
**characterized by** providing quantum random numbers of maximum theoretical entropy and feeding same to a digital computer (10) where they are used to obtain Laplace noise for entry into the transform algorithm.

11. The method according to claim 10, including transmitting the second synthesized data set via a communication link or a network (50) to a further entity (60).

12. A data set that is obtainable as the second synthesized data set out of a first data set by performing the method of claim 10 or 11.

13. A unit (20) acting as a machine learning model that has been trained on the basis of first data, wherein on the basis of the first data, second synthesized data have been generated by means of the method according to claim 10 or 11 as the training data, wherein these second synthesized data have been provided as an input to the unit acting as the machine learning model.

14. A machine-learning device configured to receive data as an input, and further including a source (30) of quantum random numbers of maximum theoretical entropy and first means (18) for receiving the quantum random numbers and for using same to obtain Laplace noise, and further including second means (16) for receiving the Laplace noise and for using the Laplace noise as a second input with respect to data provided as a first input.

15. A method of training a machine learning model, the method including providing, as a first data set, raw training data and using the raw training data as a basis for the method according to claim 10 or 11 to generate second synthesized data, the second synthesized data being input as final training data to the machine learning model.
